# EUROPEAN PATENT APPLICATION

(11) **EP 4 685 408 A1**
(43) Date of publication of application: **28.01.2026**
(21) Application number: 25190085.8
(22) Date of filing: 17.07.2025
(51) Int. Cl.: F24F 12/00, F24F 13/10

(54) **CONTROLLED MECHANICAL VENTILATION MACHINE BYPASS SYSTEM**

(30) Priority: 26.07.2024 IT 202400017488
(71) Applicant: Valsir S.p.A. A Socio Unico, 25078 Vestone (BS) (IT)
(72) Inventor: BONI, Simone, 25078 Vestone (BS) (IT); BONOMINI, Paolo, 25078 Vestone (BS) (IT); DE DONNO, Remo, 25078 Vestone (BS) (IT)
(74) Representative: Studio Torta S.p.A.

(57) **Abstract**

A controlled mechanical ventilation machine (1) comprises a pair of separate channels (7, 8) connecting respective inlets (3, 5) and respective outlets (4, 6) and provided with respective fans (11, 12) to circulate respective airflows along the channels (7, 8); a heat exchanger (10) connected to the channels (7, 8) to exchange heat between the airflows circulating in the channels (7, 8); and a bypass system (13), comprising a bypass channel (14) connecting two sections of a first channel (8) respectively upstream and downstream of the exchanger (10); the bypass channel (14) departs from a first fan (12) that is provided with a shutter device (15) configured to selectively open and close the bypass channel (14) so as to send air into the first channel (8) through the exchanger (10), closing the bypass channel (14), and into the bypass channel (14), closing the first channel (8).

## Description

### CROSS-REFERENCE TO RELATED APPLICATIONS

This patent application claims priority from Italian patent application no. 102024000017488 filed on July 26, 2024, the entire disclosure of which is incorporated herein by reference.

### TECHNICAL FIELD

The present invention relates to a controlled mechanical ventilation machine having a bypass system.

### BACKGROUND

It is known that to obtain an effective exchange of air in a closed space, for example in buildings, whether residential or for various activities, controlled mechanical ventilation (CMV) machines are used.

In general, a CMV machine performs the air exchange in a room by taking exhaust air from the room and conveying it to the outside, and introducing fresh air, taken from outside, into this room. The exhaust air and fresh air flows are moved by fans and pass through a heat exchanger.

To limit energy consumption, it is known to include in the CMV machine a bypass system, which prevents the air (typically the fresh air) from passing through the heat exchanger in specific temperature conditions of the air.

Normally, the bypass system acts on the fresh air flow: the device, operated by a thermal actuator, intercepts the fresh air flow entering the CMV machine and acts, in specific temperature conditions, to divert the flow outside the heat exchanger, preventing heat exchange with the exhaust air.

Known bypass systems require a large number of components, moreover which cannot be widely used in other applications, as they must be specifically designed and fabricated for each machine or type of machine.

An object of the present invention is to overcome the drawbacks indicated above, by providing a controlled mechanical ventilation machine having an efficient, simple and versatile bypass system.

In particular, an object of the invention is to provide a controlled mechanical ventilation machine with a bypass system having a limited number of components, and which can be used on different CMV machines.

### SUMMARY

The present invention thus relates to a controlled mechanical ventilation machine as defined in the appended claim 1 and, with regard to its additional features, in the dependent claims.

The invention thus provides a controlled mechanical ventilation machine with an efficient, simple and versatile bypass system.

In particular, the air is diverted into the bypass channel directly inside a fan: in this way, the same fan can be used in different applications and on different CMV machines, without requiring specifically designed and fabricated components.

### BRIEF DESCRIPTION OF THE DRAWINGS

The invention is further described in the following non-limiting examples of embodiment, with reference to the figures of the accompanying drawings, wherein:
- Fig. 1 is a simplified schematic view of a controlled mechanical ventilation machine having a bypass system in accordance with a first embodiment of the invention;
- Fig. 2 is a perspective view of a detail of the machine of Fig. 1, in a first operating condition;
- Fig. 3 is a perspective view of the detail of Fig. 2, in a second operating condition;
- Fig. 4 is a simplified schematic view of a controlled mechanical ventilation machine having a bypass system in accordance with a second embodiment of the invention;
- Fig. 5 is a perspective view of a detail of the machine of Fig. 4, in a first operating condition;
- Fig. 6 is a perspective view of the detail of Fig. 5, in a second operating condition.

### DESCRIPTION OF EMBODIMENTS

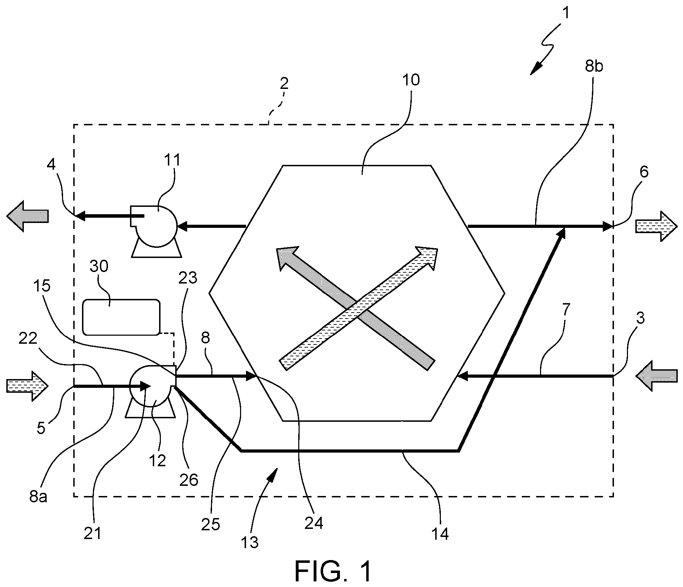

In Fig. 1, a controlled mechanical ventilation machine (CMV) is indicated as a whole with the number 1.

The machine 1 can be a point (or decentralized) machine, or a centralized (or ducted) machine.

As is known, a point CMV machine is installed visible, in use, in a room normally used for people to dwell in, and is configured to circulate air in the same installation room in which the machine is installed, taking a flow of exhaust air directly from the installation room and conducting it outside this installation room; and introducing a flow of fresh air, taken from the outside of the installation room, directly into this room.

A centralized CMV machine is instead positioned in a technical room, used to house machines and equipment and, only occasionally, people, and serves a plurality of other rooms to which it is connected by means of ducts.

Preferably, the machine 1 is a dual flow machine, i.e., in which the flow of exhaust air and the flow of fresh air are circulated simultaneously inside the machine 1 in respective separate channels.

To the extent required for understanding the present invention, the machine 1 comprises an enclosure 2 having an exhaust air inlet 3, an exhaust air outlet 4, a fresh air inlet 5 and a fresh air outlet 6.

Inside the enclosure 2, a channel 7 connects the exhaust air inlet 3 and the exhaust air outlet 4, and a channel 8, separate from the channel 7 and not communicating therewith, connects the fresh air inlet 5 with the fresh air outlet 6.

The unit 1 further comprises, inside the enclosure 2, a heat exchanger 10 connected to the channels 7, 8 to exchange heat between the flows circulating in the two channels 7, 8; the exchanger 10 is provided internally with separate ducts, placed along the channels 7, 8, respectively, so as to separately receive and process the flow of exhaust air circulating in the channel 7 and the flow of fresh air circulating in the channel 8, and exchange heat between them.

The enclosure 2 further houses a fan 11 positioned along the channel 7 to circulate exhaust air (taken from the room to be served) along the channel 7; and a fan 12 positioned along the channel 8 to circulate fresh air (taken from the outside environment) through the channel 8.

Preferably, but not necessarily, the fans 11, 12 are centrifugal fans and can be positioned along the respective channels 7, 8 downstream or upstream of the exchanger 10.

Preferably, the channels 7, 8 are provided with respective filters (not illustrated for simplicity).

The machine 1 comprises a bypass system 13, which is used to divert the flow of fresh air (or of exhaust air) outside the exchanger 10 when necessary, preventing it from passing through the exchanger 10.

Hereunder, reference will be made, purely by way of example, to the case in which the bypass system 13 acts on the fresh air.

The bypass system 13 comprises a bypass channel 14 connecting two sections 8a, 8b of the channel 8 upstream and downstream of the exchanger 10, respectively; the section 8a connects the inlet 5 with the heat exchanger 10, and the section 8b connects the exchanger 10 to the outlet 6. In the example of Fig. 1, although not necessarily, the fan 12 is positioned upstream of the exchanger 10 along the channel 8 and precisely along the section 8a.

In accordance with the invention, the fan 12 is provided with a shutter device 15 configured to selectively open and close the bypass channel 14 so as to send air into the channel 8 through the exchanger 10, closing the bypass channel 14, and into the bypass channel 14, closing the channel 8.

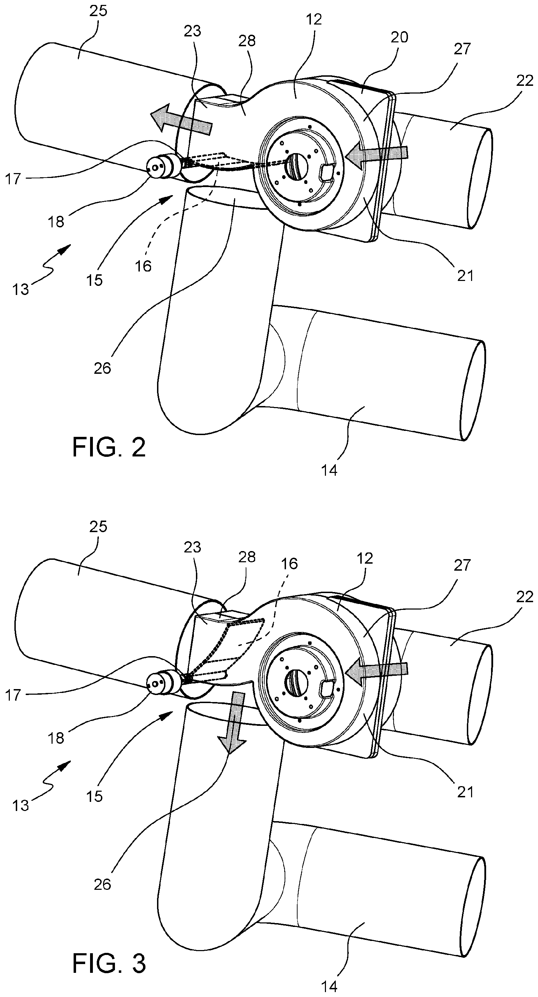

With reference also to Fig. 2, the bypass channel 14 departs from the fan 12 and the shutter device 15 comprises a shutter 16, positioned inside the fan 12 and movable to selectively send the fresh air into the channel 8, closing the bypass channel 14, and into the bypass channel 14, closing the channel 8. The shutter 16 is actuated by an actuator 17, for example moved by an electric motor 18.

In more detail, the fan 12 comprises a body 20 having: a suction inlet 21 connected to the inlet 5 by a first portion 22 of the channel 8; a discharge outlet 23 connected to an inlet 24 of the exchanger 10 by a second portion 25 of the channel 8; and an auxiliary opening 26 connected to the bypass channel 14 and defining an auxiliary outlet of the fan 12.

In the preferred embodiment illustrated, although not necessarily, the fan 12 is a centrifugal fan that draws inflowing air along the axis of its impeller and sends outflowing air in a radial direction (i.e., in a direction perpendicular to the axis of the impeller).

The body 20 is scroll shaped and comprises a central part 27, which houses the impeller of the fan 12 and is provided with the suction inlet 21, and a radial part 28, which extends radially from the central part 27 and is provided with the discharge outlet 23 and the auxiliary opening 26.

The discharge outlet 23 and the auxiliary opening 26 are defined by respective adjacent openings, formed on respective adjacent wall portions, for example (although not necessarily) substantially orthogonal to each other, of the radial part 28.

The shutter 16 is conformed to alternately close the discharge outlet 23 and the auxiliary opening 26, and is movable between: a first operating position (Fig. 2), in which the shutter 16 closes the auxiliary opening 26 and leaves the discharge outlet 23 open, and therefore the airflow that passes through the fan 12 is sent through the discharge outlet 23 to the exchanger 10 through the portion 25 of the channel 8; and a second operating position (Fig. 3), in which the shutter 16 closes the discharge outlet 23 and leaves the auxiliary opening 26 open, and therefore the airflow that passes through the fan 12 is sent through the auxiliary opening 26 into the bypass channel 14.

The shutter 16 is actuated by the motor 18 via the actuator 17; the motor 18 is, for example, positioned outside the radial part 28 and transmits motion to the actuator 17 inside the radial part 28.

The movement of the shutter 16 (i.e., operation of the motor 18 and of the actuator 17) is controlled by a control unit 30 of the machine 1, for example in temperature conditions detected by sensors.

In use, the machine 1 takes exhaust air from the room to be served and introduces fresh air, taken from outside, into the room to be served: when it is advantageous to exchange heat between the exhaust air and the fresh air, the shutter 16 of the bypass system 13 is in its operating position in which the discharge outlet 23 is open and the auxiliary opening 26 is closed; the exhaust air enters the machine 1 through the inlet 3 and, moved by the fan 11, flows along the channel 7 and the exchanger 10 before being expelled through the outlet 4; the fresh air enters the machine 1 through the inlet 5 and flows along the channel 8 passing through the exchanger 10, before being introduced into the room to be served through the outlet 6.

Instead, when the exchange of heat between exhaust air and fresh air is to be prevented, the control unit 30 moves the shutter 16 into the operating position in which the discharge outlet 23 is closed and the auxiliary opening 26 is open; therefore, the fresh air does not pass through the exchanger 10 but through the bypass channel 14.

Clearly, the bypass system 13 can be applied to the exhaust air channel 7, instead of the fresh air channel 8 as described and illustrated above; in this case, it is the fan 11 that is provided internally with the shutter 16 and with the auxiliary opening 26 connected to the bypass channel 14.

In both cases, the fan 11 or the fan 12 associated with the bypass system 13 can be positioned not only upstream of the exchanger 10, as described above, but also downstream of the exchanger 10.

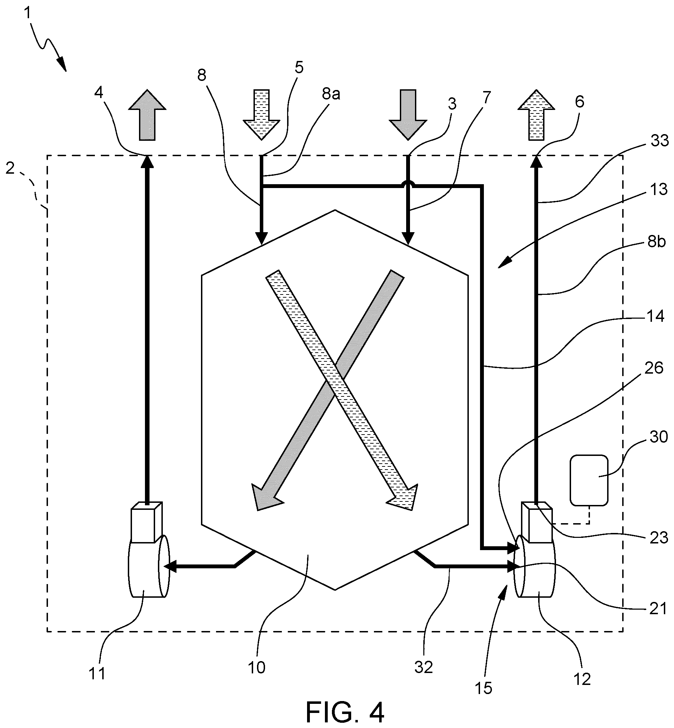

For example, in the embodiment illustrated in Fig. 4, the bypass system 13 still acts on the fresh air, with the bypass channel 14 connecting the two sections 8a, 8b of the channel 8 upstream and downstream of the exchanger 10, respectively, but the fan 12 is positioned downstream of the exchanger 10 along the channel 8 and precisely along the section 8b.

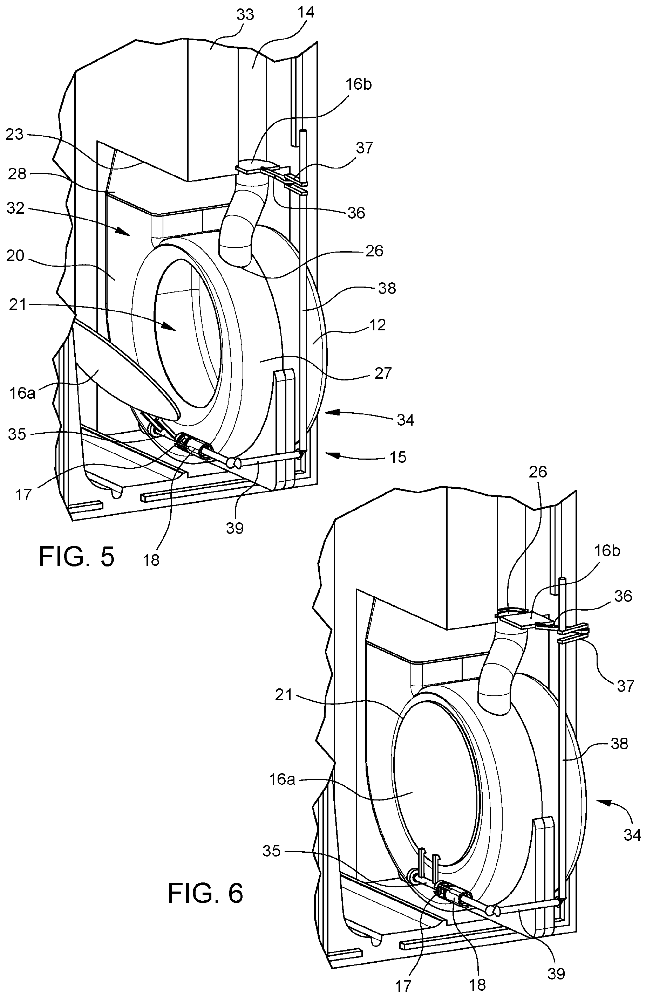

With reference also to Figs. 5 and 6, the fan 12 comprises a body 20 having: a suction inlet 21 connected to an outlet of the exchanger 10 by a section 32 of the channel 8 (precisely, the section 8b); a discharge outlet 23 connected to the outlet 6 through a section 33 of the channel 8 (precisely, the section 8b); and an auxiliary opening 26 connected to the bypass channel 14 and defining an auxiliary inlet of the fan 12.

Also in the embodiment illustrated in Figs. 5-6, the fan 12 is, for example, a centrifugal fan that draws in inflowing air along the axis of its impeller and sends outflowing air in a radial direction (i.e., in a direction perpendicular to the axis of the impeller).

Also in this case, the fan 12 has a scroll shaped body 20 and comprises a central part 27, which houses the impeller of the fan 12 and is provided with the suction inlet 21, and a radial part 28, which extends radially from the central part 27 and is provided with the discharge outlet 23.

In this case, the auxiliary opening 26 is located on the central part 27 of the body 20; the suction inlet 21 and the auxiliary opening 26 are defined by respective openings formed on the central part 27 of the body 20; for example, the suction inlet 21 is located axially along the axis of rotation of the impeller of the fan 12 on a front face of the central part 27, and the auxiliary opening 26 is located on a side wall of the central part 27.

The fan 12 is provided with a shutter device 15 comprising a pair of shutters 16a, 16b: the shutter 16a is movable to selectively open and close the suction inlet 21; the shutter 16b is movable to selectively open and close the auxiliary opening 26. The actuator 17 simultaneously moves the two shutters 16a, 16b, for example through a mechanism 34 that connects the shutters 16a, 16b so that when the shutter 16a closes the suction inlet 21, the shutter 16b opens the auxiliary opening 26, and vice versa.

In particular, the shutters 16a, 16b are movable between a first operating position (Fig. 5), in which the shutter 16a leaves the suction inlet 21 open and the shutter 16b closes the auxiliary opening 26 (and hence the bypass channel 14), and therefore the fan 12 draws in fresh air that has passed through the exchanger 10; and a second operating position (Fig. 6), in which the shutter 16a closes the suction inlet 21 and the shutter 16b leaves the auxiliary opening 26 open, and the fan 12 draws in fresh air, which does not pass through the exchanger 10, directly from the inlet 5 through the bypass channel 14.

In the non-limiting example illustrated in Figs. 5-6, although not necessarily, the mechanism 34 comprises: a rotary pin 35, coupled to the actuator 17; a connecting rod 36 cooperating with a crank 37 attached to a crankshaft 38; a transmission system 39, for example a bevel gear transmission system, which transmits the rotary motion from the pin 35 to the crankshaft 38 and then to the crank 37. The shutter 16a is mounted on the pin 35 integral therewith and the shutter 16b is hinged to one free end of the connecting rod 36.

It is understood that the shutters 16a, 16b and the mechanism 34 can differ from those described herein purely by way of example and the movement of the shutters 16a, 16b can be obtained in other ways.

The movement of the shutter device 15 **(i.e.,** operation of the motor 18 and of the actuator 17) is again controlled by the control unit 30 of the machine 1, for example in temperature conditions detected by sensors.

The operation is identical to what has been described above.

Finally, it is understood that further modifications and variations can be made to the controlled mechanical ventilation machine described and illustrated herein without departing from the scope of the appended claims.

## Claims

1. A controlled mechanical ventilation machine (1) having a bypass system, the machine comprising a pair of separate channels (7, 8) connecting respective inlets (3, 5) and respective outlets (4, 6) of the machine (1) and provided with respective fans (11, 12) to circulate respective airflows along the channels (7, 8); a heat exchanger (10) connected to the channels (7, 8) to exchange heat between the airflows circulating in the channels (7, 8); and a bypass system (13), comprising a bypass channel (14) connecting two sections of a first channel (8) upstream and downstream of the exchanger (10), respectively; **characterized in that** that the bypass channel (14) departs from a first fan (12) that is provided with a shutter device (15) configured to selectively open and close the bypass channel (14) so as to send air into the first channel (8) through the exchanger (10), closing the bypass channel (14), and into the bypass channel (14), closing the first channel (8).

2. The machine according to claim 1, wherein said first fan (12) has a suction inlet (21), a discharge outlet (23), and an auxiliary opening (26) connected to the bypass channel (14); and the shutter device (15) acts on the auxiliary opening (26) and at least one between the suction inlet (21) and the discharge outlet (23).

3. The machine according to claim 2, wherein the shutter device (15) is configured to open the auxiliary opening (26) and close the suction inlet (21) or the discharge outlet (23); and alternatively close the auxiliary opening (26) and open the suction inlet (21) or the discharge outlet (23).

4. The machine according to claim 2 or 3, wherein the shutter device (15) comprises a shutter (16) acting alternately on the auxiliary opening (26) and on one between the suction inlet (21) and the discharge outlet (23); or a pair of shutters (16a, 16b) acting on the auxiliary opening (26) and on one between the suction inlet (21) and the discharge outlet (23), respectively.

5. The machine according to any one of the preceding claims, wherein the shutter device (15) is actuated by an actuator (17), for example moved by an electric motor (18).

6. The machine according to any one of claims 1 to 5, wherein the first fan (12) is located upstream of the exchanger (10) along the first channel (8); and wherein the suction inlet (21) is connected to a first inlet (5) of the machine (1) via a first portion (22) of the first channel (8); the discharge outlet (23) is connected to an inlet (24) of the exchanger (10) via a second portion (25) of the first channel (8); and the auxiliary opening (26) is connected to the bypass channel (14) and defines an auxiliary outlet of the first fan (12).

7. The machine according to claim 6, wherein the first fan (12) is a centrifugal fan and has a scroll shaped body (20) comprising a central part (27), which houses the impeller of the first fan (12) and is provided with the suction inlet (21), and a radial part (28), which extends radially from the central part (27) and is provided with the discharge outlet (23) and the auxiliary opening (26).

8. The machine according to claim 7, wherein the discharge outlet (23) and the auxiliary opening (26) are defined by respective adjacent openings formed on respective adjacent wall portions, for example substantially orthogonal to each other, of the radial part (28) of the body (20).

9. The machine according to any one of claims 6 to 8, wherein the shutter device (15) comprises a shutter (16) that is housed in the radial part (28) of the body (20) and is conformed to alternately close the discharge outlet (23) and the auxiliary outlet (26).

10. The machine according to any one of claims 1 to 5, wherein the first fan (12) is located downstream of the exchanger (10) along the first channel (8); and wherein the suction inlet (21) is connected to an outlet of the exchanger (10) via a first portion (32) of the first channel (8); the discharge outlet (23) is connected to a first outlet (6) of the machine (1) via a second portion (33) of the first channel (8); and the auxiliary opening (26) is connected to the bypass channel (14) and defines an auxiliary inlet of the first fan (12).

11. The machine according to claim 10, wherein the first fan (12) is a centrifugal fan and has a scroll shaped body (20) comprising a central part (27), which houses the impeller of the fan (12) and is provided with the suction inlet (21) and the auxiliary opening (26), and a radial part (28), which extends radially from the central part (27) and is provided with the discharge outlet (23).

12. The machine according to claim 11, wherein the suction inlet (21) is located axially along the axis of rotation of the fan of the first impeller (12) on a front face of the central part (27), and the auxiliary opening (26) is located on a side wall of the central part (27).

13. The machine according to any one of claims 10 to 12, wherein the shutter device (15) comprises a first shutter (16a) movable to selectively open and close the suction inlet (21); and a second shutter (16b) movable to selectively open and close the auxiliary opening (26); and wherein the shutters (16a, 16b) are connected to each other so that when the first shutter (16a) closes the suction inlet (21), the second shutter (16b) opens the auxiliary opening (26), and vice versa.

14. The machine according to any one of the preceding claims, wherein said first channel (8) connects a fresh air inlet (5) with a fresh air outlet (6) of the machine (1) and the first fan (12) is located along said first channel (8) to circulate fresh air through said first channel (8).
